# EUROPEAN PATENT SPECIFICATION

(11) **EP 1 995 970 B1**
(45) Date of publication and mention of the grant of the patent: **18.04.2012**
(21) Application number: 08156369.4
(22) Date of filing: 16.05.2008
(51) Int. Cl.: H04N 7/24, H04H 60/27

(54) **Receiving apparatus, recording apparatus, content receiving method, and content recording method**
Empfangsvorrichtung, Aufzeichnungsvorrichtung, Inhaltsempfangsverfahren und Inhaltsaufzeichnungsverfahren
Appareil récepteur, appareil d'enregistrement, procédé de réception de contenu, et procédé d'enregistrement de contenu

(30) Priority: 21.05.2007 JP 2007134739
(43) Date of publication of application: 26.11.2008
(73) Proprietor: Sony Corporation, Tokyo (JP)
(72) Inventor: Hayashi, Morihiko, Tokyo (JP)
(74) Representative: Thévenet, Jean-Bruno

(56) References cited:
- WO-A-2004/114661
- US-A1- 2004 266 336
- US-A1- 2005 149 965
- US-A1- 2006 026 184
- NOKIA: "Nokia N92 User Guide" NOKIA N92 SUPPORT, [Online] 31 December 2006 (2006-12-31), XP002505625 Retrieved from the Internet: URL:http://nds1.nokia.com/phones/files/gui des/Nokia_N92-1_UG_en.pdf> [retrieved on 2008-11-20]
- UPNP FORUM: "UPnP Device Architecture 1.0" INTERNET CITATION, [Online] XP002373177 Retrieved from the Internet: URL:http://www.upnp.org/resources/document s/CleanUPnPDA101-20031202s.pdf> [retrieved on 2006-03-21]
- BRENT A MILLER ET AL: "Home Networking with Universal Plug and Play", IEEE COMMUNICATIONS MAGAZINE, IEEE SERVICE CENTER, PISCATAWAY, US, vol. 39, no. 12, 1 December 2001 (2001-12-01), pages 104-109, XP011091867, ISSN: 0163-6804

## Description

### BACKGROUND OF THE INVENTION

### 1. Field of the Invention

The present invention relates to a receiving apparatus having the function of receiving contents and to a recording apparatus having the function of recording the contents transferred from the receiving apparatus, as well as to a content receiving method and a content recording method for receiving and recording contents using the receiving apparatus and the recording apparatus.

### 2. Description of the Related Art

Recent years have witnessed the widespread use of recording apparatuses such as hard disk drives (HDD) or digital versatile disk (DVD) drives with mass storage for recording and reproducing contents in digital form including digital TV broadcasts. When recording digital contents using such recoding apparatuses, users may check an electronic program guide (EPG) that is broadcast or received over a network and selectively reserve desired contents for automatic recording.

One method for automatically recording contents involves making videos in units smaller than individual TV programs based on the program information derived from the EPG (e.g., see Japanese Patent Laid-Open No. 2007-13727; referred to as the Patent Document 1 hereunder). According to this method, when a popular song program is being recorded, artist-specific folders are automatically created so that the songs sung by a particular singer may be extracted one by one from the recorded program and stored into the folder created for the artist in question.

The method disclosed by the above-cited Patent Document 1 still demands that programs be manually reserved for unattended recording by use of the EPG. Furthermore, videos may not be made in an automatically categorized manner reflecting the recording apparatus user's preferences.

A different recording method has been proposed (e.g., see Japanese Patent Laid-Open No. 2006-268966; referred to as the Patent Document 2 hereunder) for use where a plurality of users utilize a single recording apparatus. This method involves creating user-specific personal areas in the recording space on the HDD, each personal area having the applicable user's personal information registered therein so that contents related to each user's personal information may be automatically searched for and stored into the respective users' personal areas. According this method, contents are categorized by personalized folder based on the personal information so that the contents may be recorded in an automatically categorized manner reflecting the individual users' preferences.

Consumer products are known which can copy or transfer files to compatible devices, for example over a hoe network. An example of such a product is the Nokia N92 mobile telephone (as described in its user guide).

US 2006/0026184 describes a system in which content files are associated with location information, notably indicating the geographical location where the file was generated or updated (e.g. the GPS coordinates of the place where a digital photo was taken). Because the content files include or are associated with this location information it is possible to store content files which have the same location information in the same folder.

W02004/114661 describes a home network system in which backup copies of content present in one device can be made automatically and stored in another device on the network, this other device being selected dependent on an assessed level of importance of the content being saved.

### SUMMARY OF THE INVENTION

According to the method disclosed by the above-cited Patent Document 2, the genre, titles, and keywords of desired contents are merely registered in each personal area. This means that contents may be automatically recorded on a user-by-user basis but may not be recorded illustratively by genre or by keyword as designated by each user. It is thus difficult for the users to find out where the desired programs have been recorded. Contents may not be recorded automatically in a manner reflecting each of the preferences registered by the individual user.

The automatic recording of contents presupposes that the function of receiving the EPG works integrally with the function of recording contents. If the device having only the function of receiving contents and the EPG (i.e., receiving apparatus) and the device with only the function of recording contents (i.e., recording apparatus) are connected via a network, then it is difficult to record contents automatically. It has been practically hard to implement as a component the recording apparatus having the function of recording contents in automated fashion.

The present invention has been made in view of the above circumstances and provides a receiving apparatus having the function of receiving contents and a recording apparatus having the function of recording the contents transferred from the receiving apparatus, as well as a content receiving method and a content recording method for receiving and recording contents using these apparatuses, the recording apparatus being implemented as a component designed to record contents automatically in a manner reflecting each of a user's preferences.

In carrying out the present invention and according to one example thereof, there is provided a receiving apparatus for receiving, either in broadcast fashion or via an external network, content information made up of contents and meta information about said contents, said receiving apparatus comprising: a device search section configured to search for a compatible device connected to the network and capable of recording the received content information, by multicasting a search request over said network; a device information acquisition section configured to acquire device information from at least one device having responded to said search request, said device information including compatible device information indicating that the responding device is a compatible device; a device compatibility determination section configured to determine, based on said device information, whether said at least one device having sent said device information is a compatible device; a storage destination information acquisition section configured such that if said at least one device having sent said device information is found to be a compatible device, then said storage destination information acquisition section acquires from said compatible device a list of media and folders where said compatible device can store content information; a content search section configured to search, among content information which was recorded, is being received, or is scheduled to be received, by the receiving apparatus, for content information having meta information related to one of the media and folder names, acquired from said compatible device, where said compatible device can store content information; and a content offering section configured such that if content information having meta information related to one of the media and folder names, acquired from said compatible device, where said compatible device can store content information is detected, then said content offering section offers the detected content information to said compatible device and transmits, to the compatible device, information identifying said one of the media and folders as the destination where said content information is to be recorded.

Preferably, the receiving apparatus according to an example of the present invention may further include a list creation section configured to create a compatible device list which records information about the compatible devices based on the device information and the media and folder list acquired from the compatible devices; wherein, if the device compatibility determination section determines that the at least one device having sent the device information is the compatible device, then the list creation section may record the at least one device to the compatible device list; and wherein, if the storage destination information acquisition section acquires the media and folder list established by the device recorded in the compatible device list, then the list creation section may record the acquired media and folder list to the compatible device list in relation to the compatible device in possession of the acquired media and folder list.

Preferably, if changes have occurred in the media and folder names related to the compatible device and if the storage destination information acquisition section acquires status change information which indicates the changes in the media and folder names at the compatible device and which is multicast by the compatible device over the network, then the storage destination information acquisition section may update the media and folder list recorded in the compatible device list in respect of this compatible device based on the status change information.

Preferably, if the storage destination information acquisition section acquires the meta information indicating that contents possessed by the compatible device have been reproduced, on the basis of the storage destination information multicast by the compatible device over the network, then the content search section may search for the content information about the contents furnished with meta information indicating completion of the reproduction of the contents; wherein, if the content information about the contents furnished with the meta information indicating the completed reproduction of the contents is detected, then the content offering section may send the detected content information in preference to the other content information to the compatible device having sent the meta information indicating the completion of the content reproduction.

Preferably, if the compatible device is provided with a folder for recording recommended content information, then the storage destination information may include at least a name representative of the folder; wherein the content search section may search for the recommended content information; and wherein the content offering section may delete files from the folder and offer the recommended content information to be written to the folder.

Preferably the recommended content information may be digest information which combines parts of a plurality of units constituting each content; wherein, if the digest information is reproduced by the compatible device, then the content offering section may either offer automatically the recommended content information corresponding to the digest information, or perform a procedure for allowing the recommended content to be purchased if the recommended content information is available on a chargeable basis.

According to a further example of the present invention, there is provided a content reception method for receiving, either in broadcast fashion or via an external network, content information made up of contents and meta information about said contents and for transferring received content information to an external device, said content reception method comprising the steps of: searching for a compatible device connected to the network and capable of recording said received content information, by multicasting a search request over said network; acquiring device information from at least one device having responded to said search request, said device information including compatible device information indicating that the responding device is a compatible device; determining, based on said device information, whether said at least one device having sent said device information is a compatible device; if said at least one device having sent said device information is found to be a compatible device, then acquiring from said compatible device a list of media and folders where said compatible device can store content information; searching among content information which was recorded, is being received, or is scheduled to be received, for content information having meta information related to one of the media and folder names acquired from said compatible device where said compatible device can store content information; and if content information having meta information related to said one of the media and folder names, acquired from said compatible device, where said compatible device can store content information is detected, then offering the detected content information to said compatible device and transmitting, to said compatible device, information identifying said one of the media and folder names as the destination where said content information is to be stored.

According to the example of the present invention, as outlined above, there are provided a receiving apparatus having the function of receiving contents, as well as a content receiving method.

### BRIEF DESCRIPTION OF THE DRAWINGS

Further objects and advantages of the present invention will become apparent upon a reading of the following description and appended drawings in which:
Fig. 1A is a schematic view explanatory of a typical configuration of an automatic recording system practiced as a first example of the present invention in which one recording apparatus is connected with a plurality of receiving apparatuses via a network;
Fig. 1B is a schematic view explanatory of another typical configuration of the automatic recording system practiced as the first example in which one receiving apparatus is connected with a plurality of recording apparatuses via a network;
Fig. 2A is a schematic view explanatory of hardware structures of the receiving apparatus and recording apparatus making up the first example;
Fig. 2B is a schematic view explanatory of other hardware structures of the receiving apparatus and recording apparatus making up the first example;
Fig, 3 is a schematic view explanatory of typical functional structures of the receiving apparatus and recording apparatus making up the first example;
Figs. 4A and 4B are schematic views explanatory of media and folders created on the media for use with the first example;
Fig. 5 is a schematic view explanatory of the flow of information in the automatic recording system constituting the first example;
Fig. 6 is a schematic view explanatory of how status changes are reported by the recording apparatus of the first example;
Fig. 7 is a flowchart of steps performed by the receiving apparatus of the first example;
Fig. 8 is a schematic view explanatory of a compatible device list for use with the first example;
Fig. 9 is a flowchart of steps performed by the recording apparatus of the first example;
Fig. 10 is a flowchart of steps performed by the recording apparatus of the first example when removable media are replaced;
Fig. 11 is a flowchart of steps performed by the receiving apparatus of the first example when contents are replenished;
Fig. 12 is a flowchart of steps performed by the recording apparatus of the first example when contents are replenished;
Fig. 13 is a flowchart of steps performed by the receiving apparatus of the first example when a push-type service is offered;
Fig. 14 is a flowchart of other steps performed by the receiving apparatus of the first example when the push-type service is offered; and
Fig. 15 is a schematic view explanatory of an automatic recording system implemented in a manner integrating a receiving apparatus with a recording apparatus.

### DETAILED DESCRIPTION OF THE PREFERRED EXAMPLES

The preferred examples of the present invention will now be described in detail with reference to the accompanying drawings. Throughout the drawings and in the specification that follows, like reference numerals designate like or corresponding parts, and their descriptions will be omitted where redundant.

### <First example>

### (Structure of the automatic recording system)

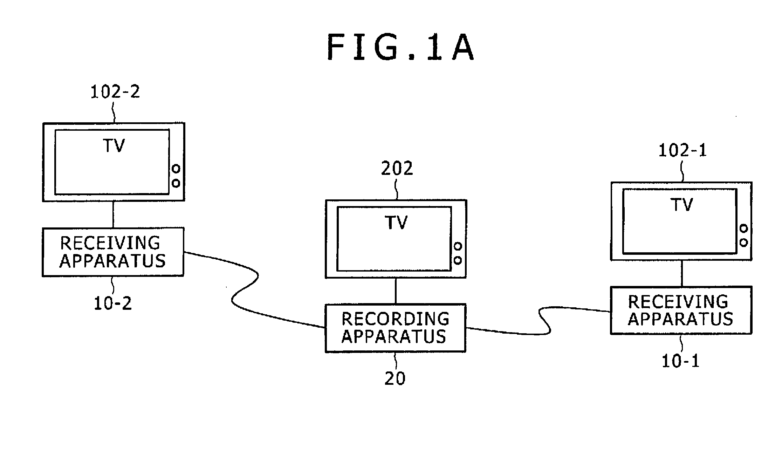

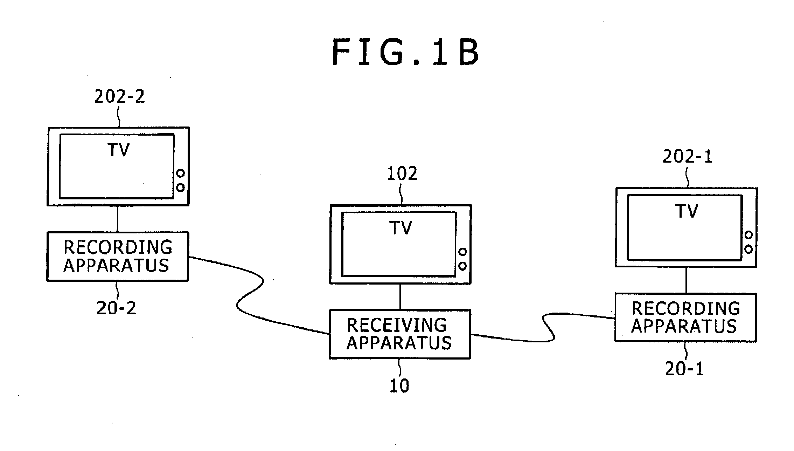

Described below in reference to Figs. 1A and 1B is an automatic recording system which has the function of automatically recording contents and which is practiced as the first example of the present invention. Fig. 1A is a schematic view explanatory of a typical configuration of the automatic recording system as the first example in which one recording apparatus is connected with a plurality of receiving apparatuses via a network. Fig. 1B is a schematic view explanatory of another typical configuration of the automatic recording system as the first example in which one receiving apparatus is connected with a plurality of recording apparatuses via a network.

As shown in Figs. 1A and 1B, the automatic recording system constituting the first example has receiving apparatuses 10 (10-1, 10-2) connected with recording apparatuses 20 (20-1, 20-2) via the network such as the Ethernet (registered trademark). The number of receiving apparatuses 10 and that of recording apparatuses 20 are not limited; there need only be at least one receiving apparatus 10 and one recording apparatus 20. In one example, one recording apparatus 20 may be connected with two receiving apparatuses 10-1 and 10-2 as shown in Fig. 1A. In another example, one receiving apparatus 10 may be connected with two recording apparatuses 20-1 and 20-2 as depicted in Fig. 1B.

In the first example, the receiving and recording apparatuses are each equipped with a TV monitor (102, 102-1, 102-2, 202, 202-1, 202-2) as an output interface (IF). Alternatively, not all apparatuses need to be furnished with the TV monitor. At least one of a plurality of receiving or recording apparatuses may be connected with a TV monitor for permitting content reproduction by way of the network.

The receiving apparatuses 10, 10-1 and 10-2 are each capable of receiving, in broadcast fashion or via an external network, content information made up of contents and meta information about the contents. Illustratively, the receiving apparatus 10 and the like may each be a device (e.g., set-top box or STB) capable of receiving broadcast contents such as BS digital broadcasts, CS digital broadcasts, and terrestrial digital broadcasts, and Internet contents delivered over the Internet; or a device capable of receiving audio contents such as songs and radio programs distributed over the Internet.

The recording apparatuses 20, 20-1 and 20-2 are each a device capable of recording the content information received by the receiving apparatus 10 or the like (the recording apparatus may be called the compatible device hereunder). Illustratively, the recording apparatus 20 and the like may each be a device which complies with a network protocol such as UPnP (Universal Plug and Play) and which can be connected to the STB.

Recent years have witnessed the emergence of non-profit organizations such as DLNA (Digital Living Network Alliance) aimed at bringing about highly interchangeable household networks (called the home network hereunder). The home network is intended to enable household appliances, personal computers (PC), and mobile devices within the home to share digital contents such as songs, photos and movies in seamless fashion therebetween. With a DLNA-compatible home network in place, a server called a digital media server (DMS) in possession of contents (movies, photos, songs) may allow a user in another room to reproduce and enjoy such contents using a client called a digital media player (DMP).

In the first example of the present invention, the receiving apparatus 10 or the like may be arranged to function as a DMS and the recording apparatus 20 or the like as a DMP on a DLNA-compliant home network.

Specific devices constituting the home network may include personal computers (PC), hard disk recorders (also called personal video recorders or PVR), TV tuners, set-top boxes (STB), digital cameras, digital video cameras, mobile phones, personal digital assistants (PDA), game consoles, stereo sets, and digital music devices.

### (Hardware structures of the receiving apparatus 10 and recording apparatus 20)

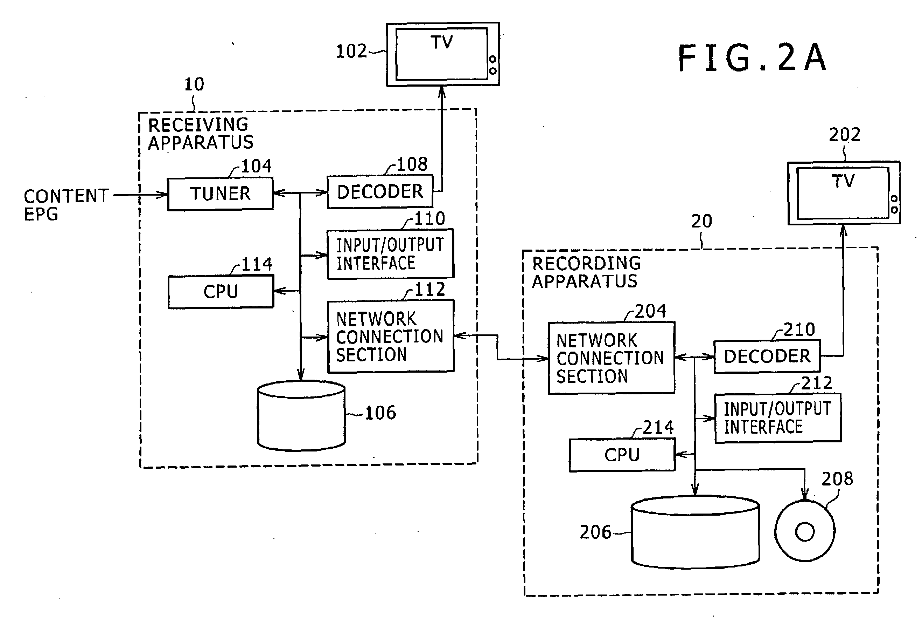

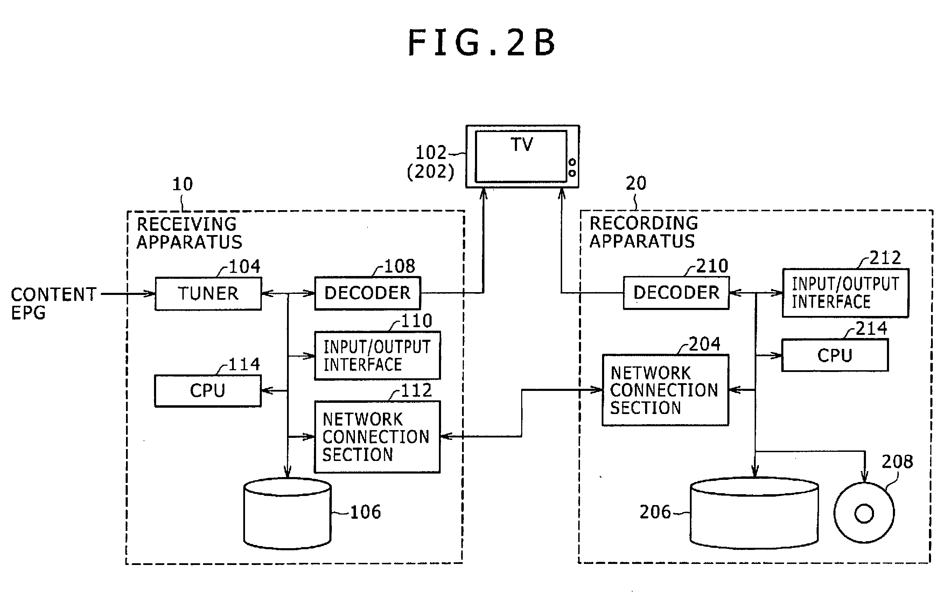

Described below in reference to Figs. 2A and 2B are typical hardware structures of the receiving apparatus 10 and recording apparatus 20. Figs. 2A and 2B each schematically show typical hardware structures of one receiving apparatus 10 and one recording apparatus 20 interconnected to constitute the first example. Apart from the setup of one receiving apparatus 10 being connected with one recording apparatus 20 as depicted in Fig. 2A or 2B, one receiving apparatus 10 may alternatively be connected with a plurality of recording apparatuses 20 or one recording apparatus 20 may be linked with a plurality of receiving apparatuses 10 as mentioned above.

As shown in Figs. 2A and 2B, the receiving apparatus 10 is a device that can receive content information made up of contents and meta information about the contents via the network. The receiving apparatus 10 also has the function of transferring the received contents to another device. The receiving apparatus 10 includes a tuner 104, a HDD 106, a decoder 108, an input/output interface 110, a network connection section 112, and a CPU 114.

The tuner 104 receives in real time digital contents such as broadcast contents including BS digital broadcasts, CS digital broadcasts, and terrestrial digital broadcasts; Internet contents delivered over the Internet; and audio contents such as songs and radio programs distributed over the Internet. In addition to contents, the tuner 10 may receive meta information about such contents. Meta information typically includes EPG or similar program information for the broadcast contents; titles, compression standards, and playing times for the other video contents; and artist names, song titles, and playing times for the audio contents. If the receiving apparatus 10 has a storage medium such as the HDD 106, then the tuner 104 may transmit the contents to the storage medium for storage. Since the contents received by the tuner 104 are most often encoded, the tuner 104r may transfer the received contents to the decoder 108 for display by suitable display means such as the TV monitor 102.

The HDD 106 may or may not be attached to the receiving apparatus 10. When furnished to the receiving apparatus 10, the HDD 106 can record the contents received by the tuner 104 as well as the contents decoded by the decoder 108. In many cases, the receiving apparatus 10 is not equipped with a removable media drive.

The decoder 108 decodes the encoded contents received by the tuner 104 into a format suitable for display by the display means such as the TV monitor 102. The decoder 108 and TV monitor 102 are interconnected illustratively by a HDMI (High Definition Multimedia Interface) cable.

The input/output interface 110 is designed to permit user-initiated input or enable user-designated output for content viewing. Illustratively, the input/output interface 110 may be a PC monitor, a TV monitor, a keyboard, a mouse, and/or a remote controller.

The network connection section 112 establishes connection with a network connection section 204 (to be discussed later) of the recording apparatus 20 by way of the network such as the Ethernet (registered trademark). The connection between the receiving apparatus 10 and recording apparatus 20 is typically established under TCP/IP. In the first example, information is exchanged between the receiving apparatus 10 and the recording apparatus 20 through the network connection section 112. For example, content information is offered by the receiving apparatus 10, or storage destination information and device information are acquired from the recording apparatus 20, through the network connection section 112. By exchanging information with the recording apparatus 20 through the network connection section 112 over the network, the receiving apparatus 10 can recognize the structure of folders in the recording apparatus 20.

The CPU 114 exercises overall control on the above-described tuner 104, HDD 106, decoder 108, input/output interface 110, and network connection section 112 in operation.

As shown in Figs. 2A and 2B, the recording apparatus 20 is a device capable of recording content information which is received by another device over the network and which is made up of contents and meta information about the contents. The recording apparatus 20 includes a network connection section 204, a HDD 206, a removable media drive 208, a decoder 210, an input/output interface 212, and a CPU 214.

The network connection section 204 establishes connection with the network connection section 112 of the receiving apparatus 10 via the network such as the Ethernet (registered trademark). The connection between the recording apparatus 20 and the receiving apparatus 10 is generally established according to TCP/IP. In the first example, information is exchanged between the recording apparatus 20 and the receiving apparatus 10 through the network connection section 204. For example, content information is acquired from the receiving apparatus 10, or storage destination information and device information are offered by the recording apparatus 20, through the network connection section 204.

The HDD 206 records the content information offered by the receiving apparatus 10 through the network connection sections 112 and 204. The contents received by the receiving apparatus 10 are frequently recorded to the recording apparatus 20 before being reproduced thereby. For that reason, the HDD 206 generally has a larger capacity that the HDD 106 of the receiving apparatus 10 which transfers contents to the recording apparatus 20.

As with the HDD 206, the removable media drive 208 records the content information offered by the receiving apparatus 10. Unlike the HDD 206, the removable media drive 208 is generally used to store contents permanently or to carry them around. If there is no need to meet such objectives, the recording apparatus 20 may not be equipped with the removable media drive 208. The removable media for use with the first embodiment may be CDs (Compact Disks), DVDs (Digital Versatile Disks), BDs (Blu-Ray Disks), and HD-DVDs (High Definition Digital Versatile Disks).

As with the decoder 108 of the receiving apparatus 10, the decoder 210 decodes the encoded content information received by the receiving apparatus 10 into a formable suitable for display by the display means such as the TV monitor 202. The decoder 210 and TV monitor 202 are interconnected illustratively by a HDMI (High Definition Multimedia Interface) cable.

The input/output interface 212, as with the input/output interface 110 of the receiving apparatus 10, is designed to permit user-initiated input or enable user-designated output for content viewing. Illustratively, the input/output interface 212 may be a PC monitor, a TV monitor, a keyboard, a mouse, and/or a remote controller.

The CPU 214 performs overall control on the above-described network connection section 204, HDD 206, removable media drive 208, decoder 210, and input/output interface 212.

Illustratively, where the receiving apparatus 10 and recording apparatus 20 are set up in separate rooms, the TV monitor 102 is connected to the receiving apparatus 10 and the TV monitor 202 to the recording apparatus 20, as shown in Fig, 2A. If the receiving apparatus 10 and recording apparatus 20 are installed in the same room, then the TV monitor 102 (202) may be connected to the decoders 108 and 210 as a common TV monitor, as depicted in Fig. 2B.

### (Functional structures of the receiving apparatus 10 and recording apparatus 20)

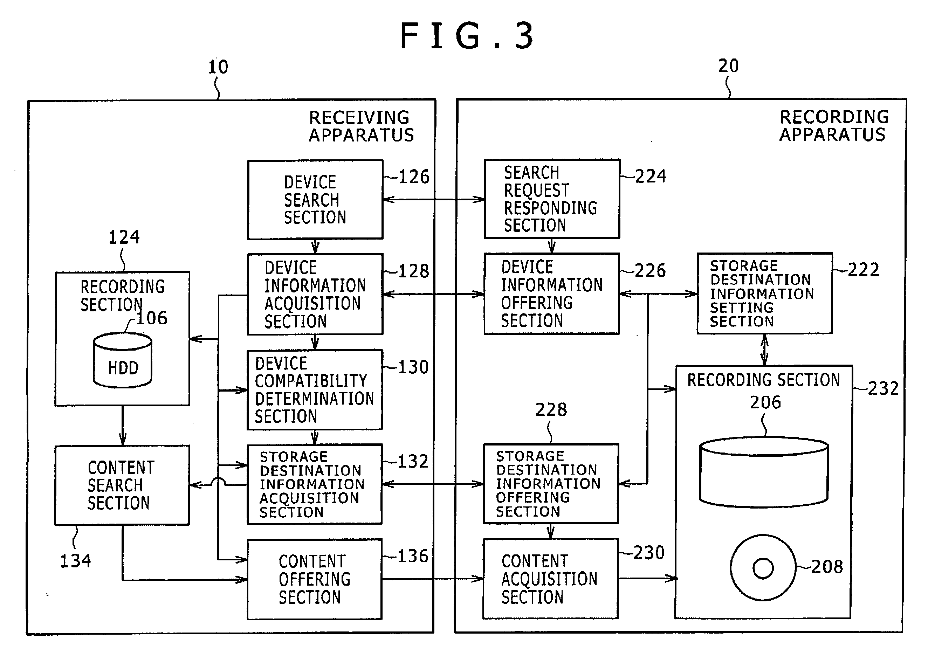

Described below in reference to Fig. 3 are functional structures of the receiving apparatus 10 and recording apparatus 20. Fig. 3 is a schematic view explanatory of typical functional structures of the receiving apparatus 10 and recording apparatus 20 making up the first example.

### (Functional structure of the receiving apparatus 10)

As shown in Fig. 3, the receiving apparatus 10 includes a recording section 124, a device search section 126, a device information acquisition section 128, a device compatibility determination section 130, a storage destination information acquisition section 132, a content search section 134, and a content offering section 136.

The recording section 124 mainly records the contents and their meta information (e.g., EPG) received by the above-mentioned tuner 104 to the storage medium such as the HDD 106. The recording section 124 may also record the device information about the recording apparatus 20 acquired by the device information acquisition section 128 (to be discussed later) as well as the storage destination information about the recording apparatus 20 obtained by the storage destination information acquisition section 132.

The device search section 126 searches for a compatible device (e.g., compatible with the UPnP standard) by multicasting a search request over the network such as the Ethernet (registered trademark), the compatible device being a device capable of recording the content information stored onto the HDD 106 by the recording section 124. If a response to the search request is received from a search request responding section 224 (to be discussed later) of the recording apparatus 20 having received the search request, then the device search section 126 reports the received response to the device information acquisition section 128.

On receiving the report from the device search section 126 that at least one device (e.g., recording apparatus 20) has responded to the search request, the device information acquisition section 128 acquires device information including compatible device information from the responding device (e.g., from device information offering section 226 of the recording apparatus 20, to be discussed later). The compatible device information is information indicating that the device having responded to the search request is a compatible device which complies with the UPnP standard and which is therefore connectable to the receiving apparatus 10. In addition to the compatible device information, the device information may include the name or names of the responding device or devices and their detailed functions.

Based on the device information acquired by the device information acquisition section 128, the device compatibility determination section 130 checks to determine whether at least one device having sent the device information is a compatible device. Illustratively, the device compatibility determination section 130 determines whether the device having sent the device information is a device (e.g., UPnP-compliant device) connectable to the receiving apparatus 10 and whether the device in question is compatible with the type of the content (e.g., images, photos, AV) received by the receiving apparatus 10.

If the device compatibility determination section 130 determines that at least one device having sent the device information is a compatible device, then the storage destination information acquisition section 132 acquires storage destination information from the compatible device (e.g., from a storage destination information offering section 228, to be discussed later, of the recording apparatus 20), the storage destination information designating in the compatible device the destination to which to store content information. The storage destination information, to be described later in detail, may typically include the names of media to which to record contents, names of folders created on the media, and a structure of the folders.

The content search section 134 searches the content information that was recorded to the HDD 106 by the recording section 124, is being received, or is scheduled to be received, for content information having meta information related to the storage destination information acquired by the storage destination information acquisition section 132. More specifically, if the content information recorded on the HDD 106 is made up of digital broadcast contents and their EPG information and if the storage destination information includes the names of media and folders, then the content search section 134 compares the EPG information with the media and folder names to check for any content having the program name that matches (or is related to) one of the media and folder names acquired from the recording apparatus 20. There are other methods for searching for the content having the meta information related to the storage destination information. One such method may involve searching for the content of which the meta information such as the names of the cast members and the subtitles acquired from the EPG information matches the names of folders. Another method may involve comparing the contents previously recorded on the media of the recording apparatus 20 with the meta information about the contents (programs) acquired from the EPG information.

Upon detection of the content information having the meta information related to the storage destination information, the content offering section 136 offers the content information in question to the compatible device (e.g., receiving apparatus 10) in possession of the storage destination information related to the meta information. At this point, the content offering section 136 designates the destination to which to store the content information to be offered, illustratively by designating a folder ID acquired beforehand from the recording apparatus 20. This enables the recording apparatus 20 to record the content information to the designated destination.

The receiving apparatus 10 may include a list creation section (not shown) configured to create a compatible device list which records information about the compatible devices based on the device information and storage destination information acquired from the compatible devices (e.g., recording apparatus 20). The information about the compatible devices may include the names of these devices and the storage destination information established thereby.

If the device compatibility determination section 130 determines that at least one device having sent the device information is a compatible device, then the list creation section may record the at least one device to the compatible device list. If the storage destination information acquisition section 132 acquires the storage destination information established by the device recorded in the compatible device list (e.g., recording apparatus 20), then the list creation section may record the acquired storage destination information to the compatible device list in relation to the compatible device in possession of the acquired storage destination information. An example of the list to be created by the list creation section will be described later.

### (Functional structure of the recording apparatus 20)

As shown in Fig. 3, the recording apparatus 20 includes a storage destination information setting section 222, a search request responding section 224, a device information offering section 226, a storage destination information offering section 228, a content acquisition section 230, and a recording section 232.

The storage destination information setting section 222 sets the storage destination information designating the destination to which to store content information. The storage destination information, as mentioned above, may include the names of media to which to record contents, names of folders created on the media, structures of the folders, types of the media and folders, remaining capacities of the media and folders, names of contents recorded on the media or in the folders, and meta information about the contents.

### (Example of storage destination information)

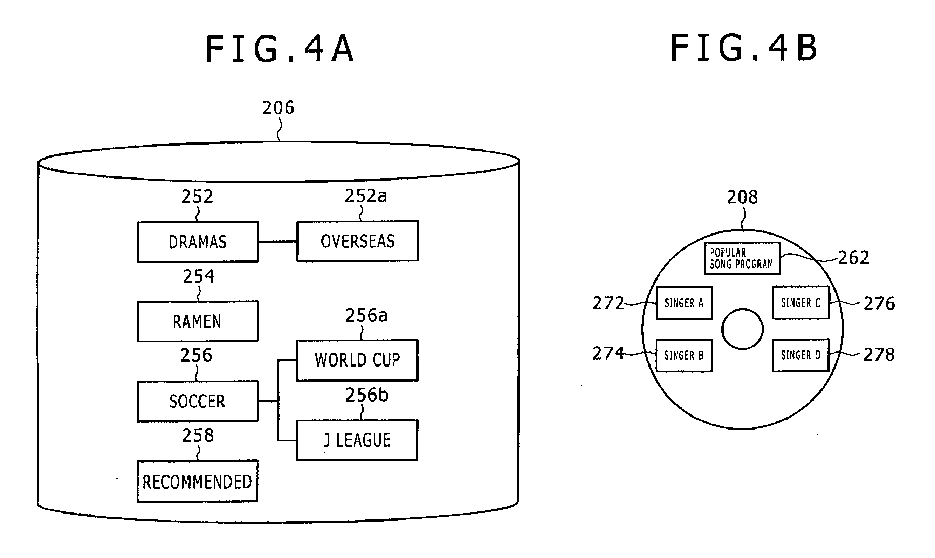

Media and folder information will now be described in reference to Figs. 4A and 4B as an example of the storage destination information set by the storage destination information setting section 222. Figs. 4A and 4B are schematic views explanatory of media and folders created on the media for use with the first example.

As shown in Fig. 4A, a plurality of folders are created on the HDD 206 of the recording apparatus 20 in keeping with the preferences of the user who uses the recording apparatus 20. Illustratively, there may be created a "Dramas" folder 252 together with an "Overseas" folder 252a subordinate to the folder 252; a "Ramen" folder 254; a "Soccer" folder 256 along with a "World Cup" folder 256a and a "J League" folder 256b subordinate to the folder 256; and a "Recommended" folder 258. The names of the folders and their structure may be determined as desired. That is, the storage destination information may be established in a manner reflecting the preferences of the user who utilizes the recording apparatus 20.

In the above example, the folders are structured to reflect predetermined AND/OR relationships. Illustratively, the "World Cup" folder 256a and "J League" folder 256b are subordinate to the "Soccer" folder 256. The "Soccer" folder 256 is thus associated with each of the "World Cup" folder 256a and "J League" folder 256b on the AND condition of keywords. That is, contents that match the keywords "Soccer" paired with the keyword "World Cup," i.e., broadcast programs of World Cup soccer matches are recorded to the "World Cup" folder 256a. Likewise, contents that match the keyword "Soccer" paired with "J League," i.e., broadcast programs of J League soccer matches are recorded to the "J League" folder 256b. World Cup matches of any other sport (e.g., volleyball) are not recorded to the "World Cup" folder 256a. The "World Cup" folder 256a and the "J League" folder 256b are established in parallel and related to each other on the OR condition of the keyword being either "World Cup" or "J League." In addition to these AND/OR conditions determining the folder structure, the folder names may be arranged to include the characters "AND/OR" to define the AND/OR relationships involved.

The above-described folders are usually set by the user of the recording apparatus 20 making necessary input. The folders may be referenced directly or may be created automatically through keyword input. In the case of keyword input, the user's operating chores can be alleviated if keyword candidates are selectively extracted from the meta information about previously recorded contents. The recording apparatus 20 may be equipped beforehand with a keyword dictionary for holding keyword candidates.

The "Recommended" folder 258 may be created to accommodate recommended contents. The contents recommended by content providers may be automatically written to or deleted from the "Recommended" folder 258, as will be discussed later in detail. Contents are recorded to this folder 258 irrespective of the user's preferences.

It is also possible to create folders in like manner on a piece of removable media as shown in Fig. 4B. For this embodiment, a piece of the removable media 208 may be named "Popular Song Program" indicated by reference numeral 262. Under the title "Popular Song Program" are subsumed folders 272, 274, 276 and 278 named "Singer A," "Singer B," "Singer C" and "Singer D," respectively. Illustratively, a popular song program in which the singer A appears is recorded to the "Singer A" folder 272 because the program is defined by the AND condition of the keyword "Popular Song Program" being paired with the keyword "Singer A." The removable media 208 are used to preserve contents permanently or to carry them around.

Although the folder structure described above was shown to be set entirely by the user of the recording apparatus 20 making suitable input, this is not limitative of the present invention. Alternatively, a folder structure recommended by a third party such as so-called TV watchers may be downloaded over the Internet.

### (More about the functional structure of the recording apparatus 20)

The functional structure of the recording apparatus 20 will be further described below in reference to Fig. 3.

The storage destination information, as described above, may include the names of the folders created on the media to which to record content information or the structure of the folders on the media. In such cases, the storage destination information setting section 222 may designate a capacity limit to each of the folders upon setting the storage destination information. The capacity limit information set by the storage destination information setting section 222 regarding the designated folders is used by the storage destination information offering section 228 to calculate the remaining capacities of the folders. The storage destination information offering section 228 may send the remaining folder capacities thus calculated to the receiving apparatus 10 upon request thereby. This makes it possible to designate the content storage capacity of the folder corresponding to each of the preferences of the user who makes use of the recording apparatus 20. That in turn enables the available media to be utilized efficiently.

The search request responding section 224 may receive a search request multicast by another device (e.g., receiving apparatus 10) over the network, the request being intended to search for a compatible device capable of recording the content information possessed by the requesting device. In such a case, the search request responding section 224 sends a response to the search request to the requesting device (e.g., to the device search section 126 of the receiving apparatus 10). Alternatively, the search request responding section 224 may notify the device information offering section 226 that the section 224 has responded to the search request from another device.

The device (e.g., receiving apparatus 10) to which the search request responding section 224 has sent its response makes a request for device information to be offered. In response to that request, the device information offering section 226 offers device information to the requesting device (i.e., to the device information acquisition section 128 of the receiving apparatus 10), the device information including compatible device information indicating that the recording apparatus 20 itself is a compatible device. The compatible device information and the device information are the same as those discussed above in connection with the receiving apparatus 10 and thus will not be described further. The device information offering section 226 extracts the device information from the HDD 206 of the recording section 232 before offering the extracted information to the requesting device. Alternatively, the device information offering section 226 may notify the storage destination information offering section 228 and storage destination information setting section 222 that the section 226 has offered the device information.

The requesting device (e.g., receiving apparatus 10) may determine that the recording apparatus 20 itself is a device capable of recording content information based on the device information offered to the requesting device by the device information offering section 226, and may send a request for storage destination information to be offered. Upon receipt of that request, the storage destination information offering section 228 offers storage destination information to the requesting device (e.g., to the storage destination information acquisition section 132 of the receiving apparatus 10). The storage destination information was discussed above in detail with reference to Figs. 4A and 4B and thus will not be described further.

Changes may later occur in the storage destination information, illustratively when the names of folders or their structures are changed, when the remaining capacity of any given folder is varied, or when the removable media are replaced. In such cases, the storage destination information offering section 228 may multicast over the network status change information indicating the occurrence of any given change in the storage destination information every time the change takes place.

There may exist content information having meta information related to the storage destination information received from the device (e.g., from the content offering section 136 of the receiving device 10) that received the storage destination information offered by the storage destination information offering section 228. If such content information is found to exist, then the content acquisition section 230 acquires the content information together with information indicating the destination to which to store the acquired content information (e.g., a folder ID representative of the folder to which to store contents). The content acquisition section 230 sends both the acquired content information and the information indicating the storage destination to the recording section 232.

The recording section 232 records the content information acquired by the content acquisition section 230 to the destination corresponding to the storage destination information offered by the storage destination information offering section 228. Based on the received information indicating the destination to which to store content information (e.g., folder ID of the folder to which to store the content information in question), the recording section 232 can record the acquired content information to the designated destination.

### (Flow of information in the automatic recording system)

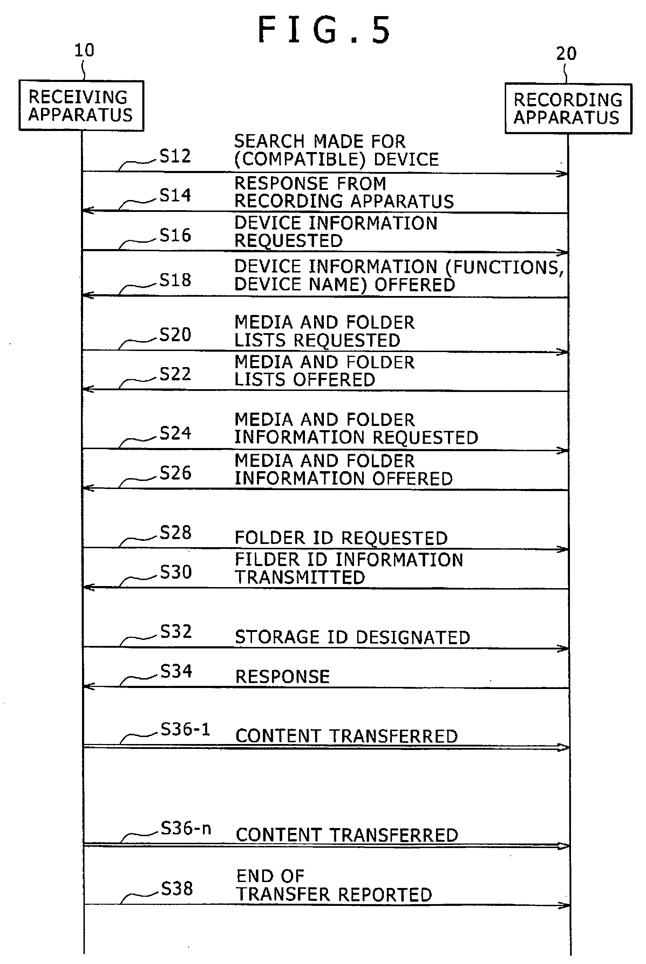

In the foregoing description, the configuration of the automatic recording system and the structures of the receiving apparatus 10 and recording apparatus 20 making up the automatic recording system were explained in detail. What follows is a description, based on Fig. 5, of how information flows through the automatic recording system. Fig. 5 is a schematic view explanatory of the flow of information in the automatic recording system constituting the first example of this invention.

As shown in Fig. 5, the automatic recording system of this example allows requests for searching for a compatible device as well as media and folder information (storage destination information) to be exchanged between the receiving apparatus 10 and the recording apparatus 20. The exchanges make it possible to have the preferences of the user (i.e., storage destination information) of the recording apparatus 20 shared over the network. Procedures are provided for acquiring information about designated folders, so that contents can be recorded automatically to the destinations created to reflect the user's preferences. The flow of such information through the automatic recording system is described below in detail. All transmission of information in this system is carried out under IP protocol. In the ensuing description, media and folder information indicating the names and structures of media and folders will be described using specific examples as typical storage destination information.

In step S12 of Fig. 5, the receiving apparatus 10 multicasts over the network a device search request with information for searching for a compatible device (e.g., UPnP-compliant device) represented typically by the recording device 20 (the request will be called the search request hereunder). In step S14, every recording apparatus 20 having received the multicast search request responds by returning a recording apparatus indication manifesting its presence on the network to the receiving apparatus 10 having sent the search request.

Upon receipt of the recording apparatus indication, the receiving apparatus 10 comes to know the presence and address of each recording apparatus 20. In step S16, the receiving apparatus 10 sends a device information request to each recording apparatus 20 to acquire more detailed information about the responding device. Upon receipt of the device information request from the receiving apparatus 10, the recording apparatus 20 in step S18 offers its device information including detailed device functions, device name, and connection availability of the apparatus 20.

In step S20, the receiving apparatus 10 issues a media/folder list request to the recording apparatus 20 having sent the device information, the request being intended to obtain lists of the media and folders possessed by the recording apparatus 20. On receiving the media/folder list request from the receiving apparatus 10, the recording apparatus 20 in step 522 offers lists of its media and folders to the receiving apparatus 10. The media and folder lists contain the names of the media and those of the folders as well as their structures created on the media so as to reflect the user's preferences. If the recording apparatus 20 has the functionality of a server, then the receiving apparatus 10 can receive further information about what is contained in each folder. In that case, not only the list of the folders but also their content structure can be known to the receiving apparatus 10.

Following receipt of the information about the media and folders in step S22, the receiving apparatus 10 requests in step S24 more detailed information (media/folder information) such as the types of the media and folders and their remaining capacities. In step S26, the recording apparatus 20 responds to the media/folder information request by offering the most recent information about the types and other details of the media and folders.

In step S28, the receiving apparatus 10 requests from the recording apparatus 20 an ID for designating the folder corresponding to the lists received in step S22 as well as to the information received in step S26. Having received the request, the recording apparatus 20 returns information about the ID of the applicable folder in step S30. The ID allows the receiving apparatus 10 to designate the destination to which to store contents when transferring the contents. The recording apparatus 20 in turn records the contents to the folder reflecting the user's preferences.

Based on the separately received meta information about contents (e.g., EPG information), the receiving apparatus 10 searches for contents that match or are related to the media and folder lists or the media and folder information possessed by the recording apparatus 20. If such contents are found to exist, then the receiving apparatus 10 using a folder ID designates the folder (storage destination) to which to store the matching or related contents in step S32. On receiving the designated storage destination, the recording apparatus 20 responds to the receiving apparatus 10 in step S34.

After designating the storage destination, the receiving apparatus 10 transfers the applicable contents in steps 536-1 through S36-n. It is assumed for this example that there are as many as "n" contents to be transferred. The contents may be transferred under HTTP (Hyper-Text Transfer Protocol) or RTP (Real-time Transport Protocol). With the content transfer completed, the receiving apparatus 10 reports completion of the transfer to the recording apparatus 20 in step S38. This terminates the content transfer procedure.

### (Status change report)

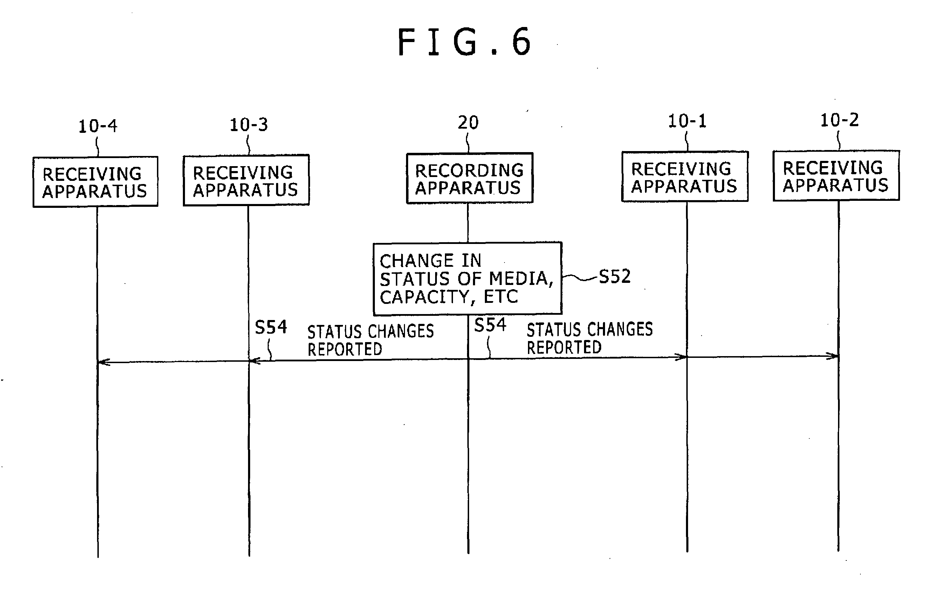

As shown in Fig. 6, there may occur changes in the names of media and folders, in their structure, or in media capacities in step S52. If any one of such changes takes place, the recording apparatus 20 may multicast in step S54 the status change information over the network in order to report the change in question to the receiving apparatuses 10-1 through 10-4 (four receiving apparatuses are assumed for this embodiment) that exist on the network. Fig. 6 is a schematic view explanatory of how status changes are reported by the recording apparatus 20 of the first example.

### (Flow of steps performed by the receiving apparatus 10)

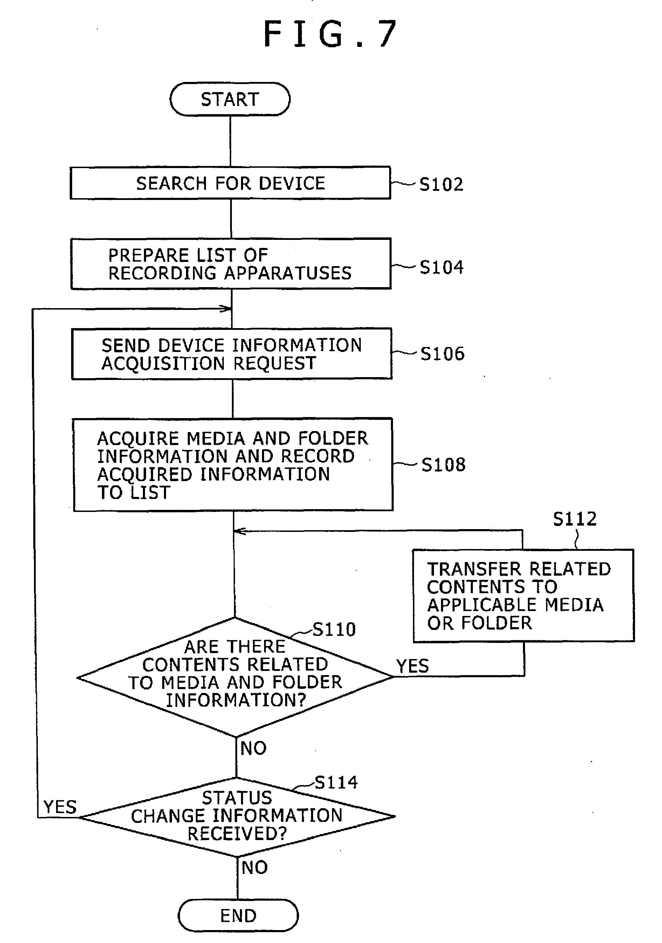

A typical flow of steps carried out by the receiving apparatus 10 of the first example will now be described in detail with reference to Fig. 7. Fig. 7 is a flowchart of steps performed by the receiving apparatus 10 of the first example.

In step S102, the receiving apparatus 10 multicasts a search request over the network such as the Ethernet (registered trademark), the request being made to search for a compatible device (e.g., UPnP-compliant device) which may exist on the network and which is capable of recording received content information. If any such compatible device (recording apparatus) is found to exist on the network, then the receiving apparatus 10 creates a list of the detected recording apparatuses (i.e., compatible device list) in step S104.

In step S106, the receiving apparatus 10 sends a device information acquisition request to each recording apparatus included in the compatible device list. In step S108, the receiving apparatus 10 acquires storage destination information (e.g., media/folder information) about each recording apparatus and records the acquired media/folder information to the compatible device list in association with the applicable recording apparatus.

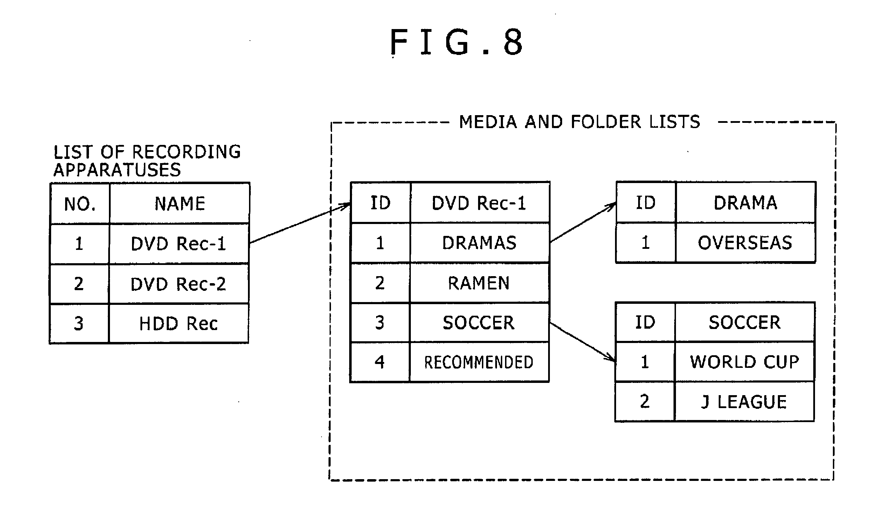

The compatible device list will now be described below in detail with reference to Fig. 8. Fig. 8 is a schematic view explanatory of the compatible device list for use with the first example.

As shown in Fig. 8, the compatible device list of this example has a tree structure in which a list of recording apparatuses is placed at the top. Subordinate lists have items each identified by an ID constituted by a component name from the immediately higher list. Although the example of Fig. 8 shows that the lists making up the tree structure contain items each identified by a component name taken from the immediately higher list, this is not limitative of the invention, Alternatively, each list may be topped by component names taken from all higher lists in the tree structure. As another alternative, folders may be simply juxtaposed in a single layer. In this case, there exist only one recording apparatus list and one folder list.

More specifically, as shown on the left-hand side of Fig. 8, the list of recording apparatuses created in step S104 may contain three numbered names of the recording apparatuses: DVD Rec-1, DVD Rec-2 (both using DVD as the medium to which to record contents), and HDD Rec (using HDD as the medium to which to record contents).

As shown in the right-hand side of Fig. 8, the media and folder lists created in step S108 may illustratively contain four folder names "Dramas," "Ramen," "Soccer," and "Recommended" related to the recording apparatus named "No. 1 DVD Rec-1." The four folders are recorded in relation to IDs designating the respective folders (e.g., the "Dramas" folder is designated by the ID of 1). Some of the four folders are associated with subordinate folders making up the tree structure. For example, the "Dramas" folder with the ID of 1 has a subordinate folder named "Overseas," and the "Soccer" folder with the ID of 3 has two subordinate folders named "World Cup" and "J League."

Returning to Fig. 7, the description is continued of the flow of steps carried out by the recording apparatus 10 of the first example.

In step S108, the receiving apparatus 10 acquires the media/folder information. In step S110, the receiving apparatus 10 compares the meta information (e.g., EPG information) of the received contents with the media/folder information recorded in the lists so as to check whether any of the received contents is related to the media/folder information. The check can be carried out by a number of methods. One method may involve searching the meta information such as EPG information received by the receiving apparatus 10 for any content that has a program name that matches (or is related to) any of the media or folder names acquired from the recording apparatus 20. Another method may involve searching for any content of which the EPG information includes cast member names or subtitles matching any of the folder names. A further method may involve comparing the contents recorded in the folders on the media of the recording apparatus 20 with the meta information of the contents (programs) acquired from the EPG information. The check above may reveal the presence of the contents related to the media/folder information. In this case, step S112 is reached and the contents in question are transferred to the applicable media or folder. The contents can be transferred to the suitable media or folder when the ID of the media or folder has been designated to represent the storage destination as discussed above.

If a plurality of receiving apparatuses are connected with the recording apparatus 20 via the network as shown in Fig. 1, then the receiving apparatuses receive diverse contents along with various kinds of EPG information from different communication or broadcasting systems. Based on the content information and media/folder information thus received, each receiving apparatus transfers the contents which correspond to the user's preferences and which are intended for automatic recording.

On the side of the recording apparatus 20, changes may occur in the media/folder information illustratively as a result of replacement of the removable media or deletion of the contents that have been viewed. In such cases, the recording apparatus 20 multicasts its status change information which may be received by the receiving apparatus 10, If in step S110 no related contents are found to exist, then step S114 is reached and a check is made to determine whether status change information has been received. If in step S114 the status change information is found to have been received, then step S106 is reached again and the receiving apparatus 10 sends another device information acquisition request to the recording apparatus 20. In step S108, the media/folder information is again obtained and the compatible device list is updated accordingly. In step S110, the receiving apparatus 10 again checks to determine whether related contents exist based on the updated compatible device information. If in step S110 the related contents are found to exist, then step S112 is reached and the contents are transferred.

### (Flow of steps performed by the recording apparatus 20)

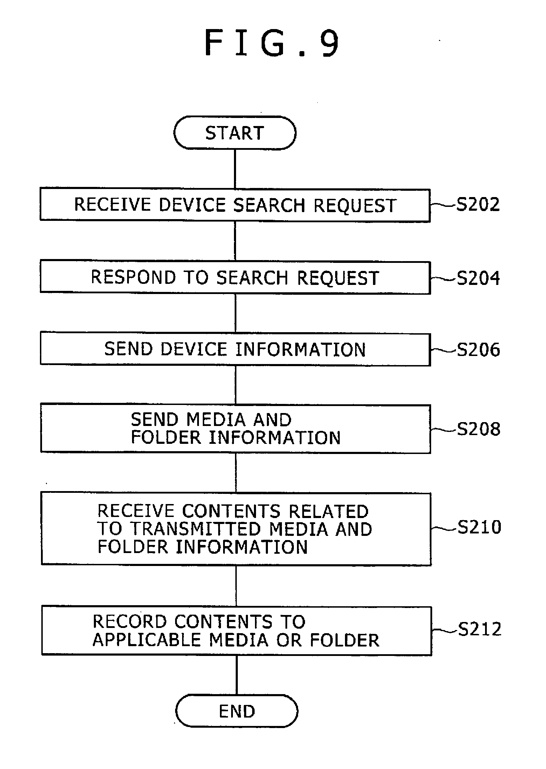

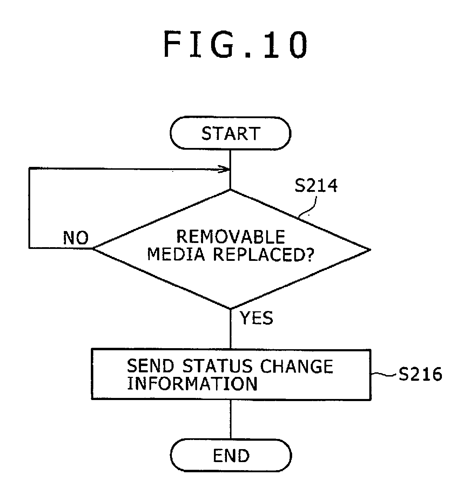

The flow of the processing by the receiving apparatus 10 was discussed above. What follows is a detailed description, based on Figs. 9 and 10, of a typical flow of steps carried out by the recording apparatus 20. Fig. 9 is a flowchart of steps performed by the recording apparatus 20 of the first example. Fig. 10 is a flowchart of steps executed by the recording apparatus 20 of the first example when removable media are replaced.

When the user inputs folder names and folder structures through the input/output interface 212 in keeping with the user's preferences, the recording apparatus 20 sets storage destination information (e.g., media/folder information) accordingly. The storage destination information (e.g., names of media and folders and the structure of the folders) is reported to the receiving apparatus 10 over the network.

In step S202, as shown in Fig. 9, the recording apparatus 20 may receive a search request multicast by the receiving apparatus 10 over the network, the request being intended to search for a compatible device capable of recording the content information possessed by the receiving apparatus 10. Upon receipt of the search request, the recording apparatus 20 sends a response to the receiving apparatus 10 in step S204.

In step S206, the recording apparatus 20 sends device information to the receiving apparatus 10, the device information including compatible device information indicating that the receiving apparatus 10 itself is a compatible device. Based on the device information coming from the recording apparatus 20, the receiving apparatus 10 may determine that the recording apparatus 20 is a compatible device and may request the recording apparatus 20 to offer predetermined storage destination information. In that case, the request is met by the recording apparatus 20 sending its storage destination information (e.g., media/folder information) to the receiving apparatus 10 in step S208.

If the receiving apparatus 10 is found to possess the content information related to the storage destination information (media/folder information) sent by the recording apparatus 20, then the recording apparatus 20 receives the content information in question from the receiving apparatus 10 in step S210.

In step S212, the recording apparatus 20 records the received content information to the applicable media or folder in accordance with the ID which was sent along with the content information and which designates the destination to which to record the content information,

If the recording apparatus 20 uses removable media, then a check is made in step S214 to determine whether the removable media have been replaced, as shown in Fig, 10. If the check reveals that replacement of the removable media has taken place, then there is a possibility that changes have occurred in media names, in the structure of the folders on the media, or in the capacity of the media. In such a case, the recording apparatus 20 multicasts status change information over the network in step S216 to prompt the receiving apparatus 10 to update its information. On receiving the status change information, the receiving apparatus 10 updates the media/folder information as discussed above. Illustratively, if the user of the recording apparatus 20 attaches to the apparatus 20 a piece of media such as one that is shown in Fig. 48 and that has the name "Popular Song Program" and the folders with singer names, then the applicable information is automatically updated by the receiving apparatus 10. This makes it possible for the receiving apparatus 10 automatically to collect contents of the preferred singers from the network. If the removable media are not found to be replaced, then step S214 is repeated until such replacement takes place.

In the automatic recording system of the first example discussed above, storage destination information is exchanged between the receiving apparatus 10 and the recording apparatus 20 over the network. It follows that even if the recording apparatus 20 does not incorporate the receiving apparatus 10, the recording apparatus 20 automatically enables contents to be selected using keywords and recorded to predetermined destinations, both the keywords and the destinations reflecting the preferences of the user who makes use of the recording apparatus 20.

The exchanges of storage destination information over the network make it possible for a single receiving apparatus 10 to transfer contents to a plurality of recording apparatuses 20 in a manner reflecting the preferences of the users of the respective apparatuses 20. The storage destination information exchanged on the network further allows a plurality of receiving apparatuses 10 to transfer to a single recording apparatus 20 diverse contents which have been received by the multiple apparatuses 10 and which reflect the preference of the user of the recording apparatus 20.

The receiving apparatus 10 and recording apparatus 20 of the first example each comply with universal standards such as UPnP. This means that a newly installed receiving apparatus 10 can be used without further settings to record contents corresponding to the preferences of the user of the apparatus 10.

In the automatic recording system of the first example, different receiving apparatuses may adopt different methods for receiving program information (EPG). However, these receiving apparatuses can still be operated to implement the same functions irrespective of their different receiving methods.

### (Replenishment of contents)

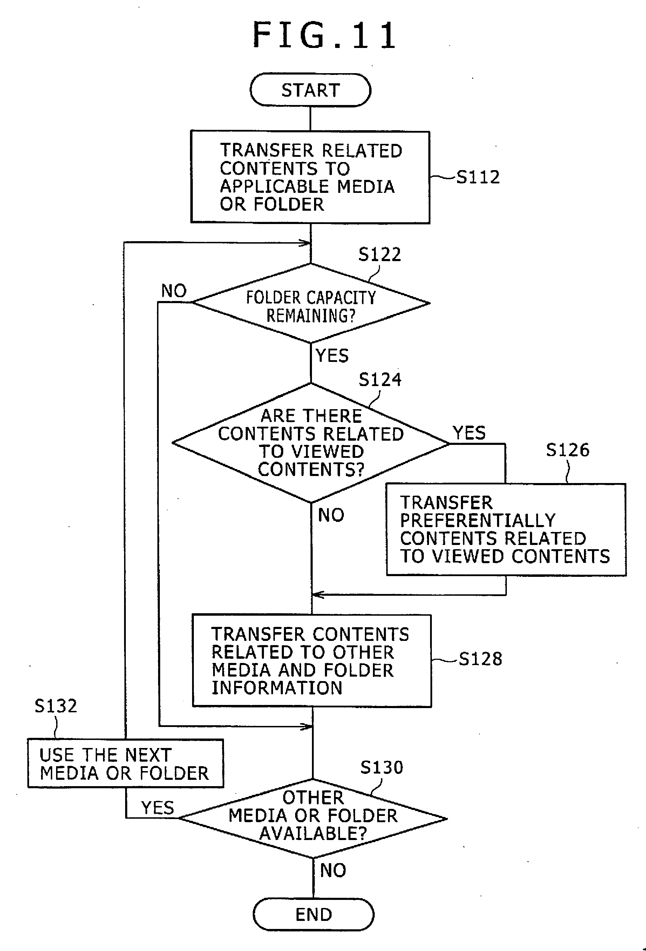

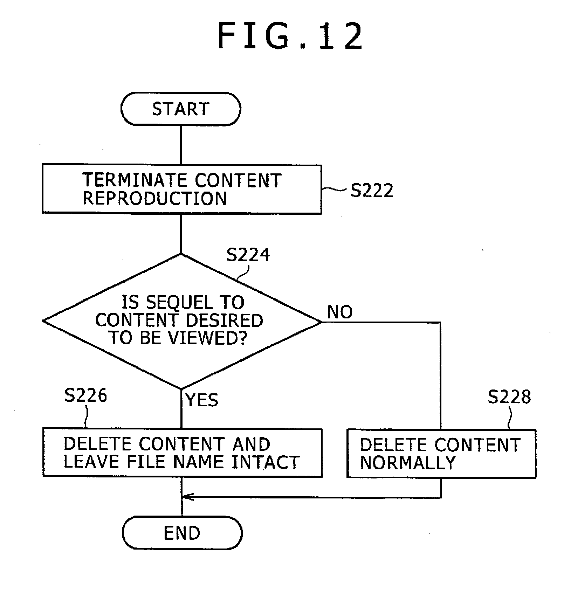

In the automatic recording system of this example, viewed contents are automatically replenished with related contents when the related contents are transferred to the applicable media/folder in step S112. How the replenishment of contents takes place will now be described below in reference to Figs. 11 and 12. Fig. 11 is a flowchart of steps performed by the receiving apparatus 10 of the first embodiment when contents are replenished. Fig. 12 is a flowchart of steps carried out by the recording apparatus 20 of the first embodiment when contents are replenished.

What takes place on the side of the receiving apparatus 10 is described first. Based on the storage destination information received over the network, the receiving apparatus 10 may come to recognize the presence of reproduced (i.e., viewed) contents from among those possessed by he recording apparatus 20. In that case, as shown in Fig. 11, step S122 is reached and a check is made to determine whether there is a storage capacity left in the folder containing the viewed contents. If in step S122 the folder is found to have a remaining capacity, then step S124 is reached and a check is made to determine whether some of the contents possessed by he receiving apparatus 10 are related to the viewed contents (e.g., subsequent episodes of a series drama or broadcasts of other sports events during the Olympic Games). If in step S124 the related contents are found to exist, then step 5126 is reached and the contents in question are transferred in preference to the other contents to the applicable folder of the recording apparatus 20. If in step S124 no contents related to the viewed contents are found to exist, then step S128 is reached and contents related to the other media/folder information (storage destination information) are transferred to the applicable folder.

If in step S122 no remaining capacity is found to exist in the folder, then step S130 is reached as when step S128 is completed. In step S130, a check is made to determine whether there exists any piece of media or a folder to which the contents can be transferred. If in step S130 any such piece of media or folder for accommodating the contents is found to exist, then step S132 is reached and a procedure for dealing with the next media or folder is initiated. Thereafter, steps S122 through S132 are repeated.

What takes place on the side of the recording apparatus 20 is described next. At the end of the reproduction of a content, as shown in Fig. 12, step S222 is reached and the content is supplemented with meta information indicating that the content in question has been reproduced. Illustratively, upon completion of the content reproduction, step S224 is reached and a check is made by displaying a suitable user interface (UI) on the TV monitor screen prompting the user to determine whether or not to view the sequel to the reproduced content. If in step S224 the sequel to the reproduced content is desired to be viewed, then step S226 is reached and the reproduced content is deleted while its file name is left intact. This step reduces the file size of the content in question to zero by erasure but leaves the file name unchanged. This makes it possible to recognize that the content in question has been reproduced. The meta information indicating that the content has been reproduced can be offered to the receiving apparatus 10 when so requested thereby. When the file size of the content is reduced to zero in step S226, that means there is a change in the capacity of the folder that holds the viewed content. In that case, status change information reflecting the change may be multicast over the network to let the receiving apparatus 10 know the presence of the already reproduced content, as discussed above in connection with Fig. 10.

If in step S224 the user is not found desirous of viewing the sequel to the reproduced content, then step S228 is reached and the content in question is deleted normally. That is, both the content and the file name are deleted.

### (Offering of the push-type service)

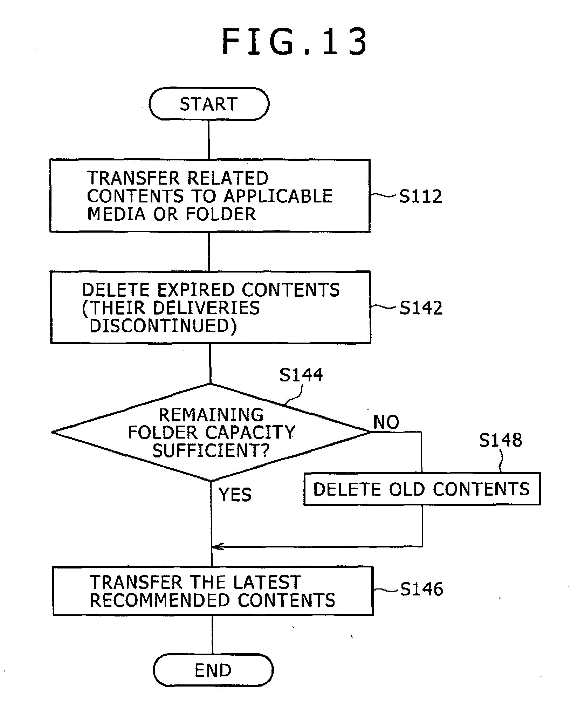

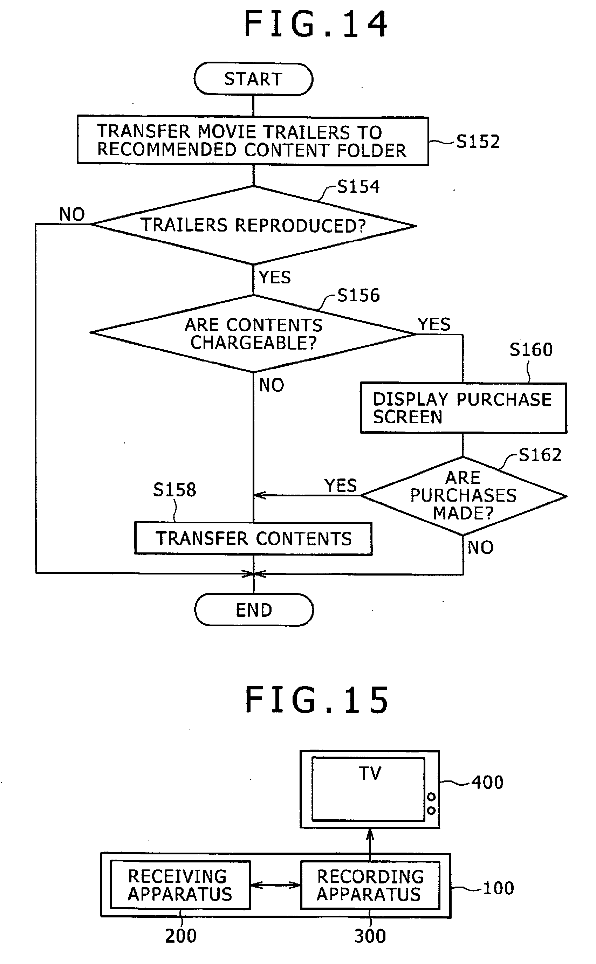

In transferring related contents to the applicable media/folder in step S112 as discussed above, the automatic recording apparatus of the first example may offer the push-type service such as one in which recommended contents are offered in "pushed" fashion. The flow of typical steps constituting the push-type service will now be described below in reference to Figs. 13 and 14. Figs. 13 and 14 are flowcharts of steps performed by the receiving apparatus 10 of the first embodiment when the push-type service is offered.

The push-type service is provided when the recording apparatus 20 has the "Recommended" folder created to receive the recommended contents being offered. In step S142, expired contents (e.g., contents whose deliveries are discontinued) are deleted as shown in Fig. 13. In step S144, a check is made to determine whether the remaining capacity of the folder (or media) is sufficient. If in step S144 the remaining folder capacity is found to be sufficient, then step S146 is reached and the latest recommended contents are transferred to the folder in question. Illustratively, upon detecting that the recording apparatus 20 has the "Recommended" folder, the receiving apparatus 10 may search recent contents for those that match such specific keywords as "program propaganda" or "trailers" and transfer the matching contents to the "Recommended" folder. If in step S144 the remaining folder capacity is found insufficient, then step S148 is reached and the old contents are deleted in order of storage from the folder until a sufficient folder capacity is made available. Because the automatic recording system of this example allows the receiving apparatus 10 to acquire via the network the media/folder information possessed by the recording apparatus 20, the receiving apparatus 10 can automatically deliver or update the contents (or their trailers) destined for the "Recommended" folder in the recording apparatus 20, whereby the push-type service is provided.

It might happen that movie trailers are transferred as recommended contents from the receiving apparatus 10 to the "Recommended" folder of the recording apparatus 20 in step S152 of Fig. 14. In that case, a check is made in step S154 to determine whether the transferred trailers have been reproduced. If the transferred trailers are not found to have been reproduced, then the corresponding contents are not transferred and the processing is brought to an end. If in step S154 the trailers are found to have been reproduced, then step S156 is reached and a check is made to determine whether the corresponding contents are chargeable. If the contents are not found to be chargeable, then step S158 is reached and the corresponding contents are transferred to the "Recommended" folder. If in step S156 the contents are found chargeable, then step S160 is reached and a content purchase screen is displayed illustratively on the TV monitor screen of the recording apparatus 20. If the user of the recording apparatus 20 in step S162 performs steps selectively on the content purchase screen to purchase at least some of the recommended contents, then step S158 is reached and the purchased contents are transferred to the "Recommended" folder. If no purchase is found to be made in step S162, then the recommended contents are not transferred and the processing is terminated. The service above is implemented to let chargeable contents be purchased as desired before being delivered.

### <Second example of the automatic recording system>

In the foregoing description, the automatic recording system practiced as the first example of the present invention was explained in detail, What follows is a brief description, in reference to Fig. 15, of another automatic recording system 100 practiced as a second example of the present invention. Fig. 15 is a schematic view explanatory of this automatic recording system 100 that integrates a receiving apparatus with a recording apparatus, the two apparatuses being similar to their above-described counterparts. Fig. 15 is a schematic view explanatory of the automatic recording system 100 implemented in a manner integrating a receiving apparatus with a recording apparatus.

As shown in Fig. 15, the automatic recording system 100 is made up of a receiving apparatus 200 and a recording apparatus 300. The recording apparatus 300 is equipped with a display device (i,e., TV monitor) 400.

The receiving apparatus 200 and the recording apparatus 300 are substantially the same as their counterparts (receiving apparatus 10 and recording apparatus 20) in structure and functionality. In terms of hardware, the common modules such as the network connection section and the CPU are not necessary for one of the two apparatuses 200 and 300.

It should be understood by those skilled in the art that various modifications, combinations, sub-combinations and alterations may occur depending on design requirements and other factor in so far as they are within the scope of the appended claims or the equivalents thereof.

## Claims

1. A receiving apparatus for receiving, either in broadcast fashion or via an external network, content information made up of contents and meta information about said contents, said receiving apparatus comprising:
a device search section (126) configured to search for a compatible device connected to the network and capable of recording the received content information, by multicasting a search request over said network;
a device information acquisition section (128) configured to acquire device information from at least one device having responded to said search request, said device information including compatible device information indicating that the responding device is a compatible device;
a device compatibility determination section (130) configured to determine, based on said device information, whether said at least one device having sent said device information is a compatible device;
a storage destination information acquisition section (132) configured such that if said at least one device having sent said device information is found to be a compatible device, then said storage destination information acquisition section (132) acquires from said compatible device a list of media and folders where said compatible device can store content information;
a content search section (134) configured, responsive to the reception or update of said list of media and folders, to search, among content information which was recorded, is being received, or is scheduled to be received by the receiving apparatus, for content information having meta information matching to one of the media and folder names, acquired from said compatible device, where said compatible device can store content information; and
a content offering section (136) configured such that if content information having meta information related to one of the media and folder names, acquired from said compatible device, where said compatible device can store content information is detected, then said content offering section (136) offers the detected content information to said compatible device and transmits, to the compatible device, information identifying said one of the media and folders as the destination where said content information is to be recorded.

2. The receiving apparatus according to claim 1, further comprising a list creation section configured to create a compatible device list which records information about the compatible devices based on said device information and the media and folder list acquired from said compatible devices; wherein
said list creation section is configured, when said device compatibility determination section (130) determines that said at least one device having sent said device information is said compatible device, to record said at least one device to said compatible device list; and
said list creation section is configured, when said storage destination information acquisition section (132) acquires said media and folder list established by the device recorded in said compatible device list, to record the acquired media and folder list to said compatible device list in relation to said compatible device in possession of said acquired media and folder list.

3. The receiving apparatus according to claim 1, wherein said storage destination information acquisition section is configured, when changes have occurred in the media and folders names related to said compatible device and said storage destination information acquisition section (132) acquires status change information which indicates said changes in said media and folder names and which is multicast by said compatible device over said network, to update its record of the media and folder listrelating to said compatible device, based on said status change information.

4. The receiving apparatus according to claim 1, wherein said content search section (134) is configured, when said storage destination information acquisition section (132) acquires meta information indicating that contents possessed by said compatible device have been reproduced, on the basis of storage destination information multicast by said compatible device over said network, to search for content information related to the reproduced contents; and
said content offering section is configured, if content information related to the reproduced contents is detected, to send the detected content information, in preference to other content information, to said compatible device having sent the meta information indicating completion of content reproduction.

5. The receiving apparatus according to claim 1, wherein said content search section (134) is configured, if said compatible device is provided with a folder for recording recommended content information and said media and folder names include at least a name representative of said folder, to search for recommended content information; and
said content offering section (136) is configured to delete files from said folder and to offer recommended content information to be written to said folder.

6. The receiving apparatus according to claim 5, wherein said recommended content information is digest information which combines parts of a plurality of units constituting each content;
and wherein said content offering section (136) is configured, when said digest information is reproduced by said compatible device, either to offer automatically recommended content corresponding to said digest information, or to perform a procedure for allowing said recommended content to be purchased if said recommended content is available on a chargeable basis.

7. A content reception method for receiving, either in broadcast fashion or via an external network, content information made up of contents and meta information about said contents and for transferring received content information to an external device, said content reception method comprising the steps of:
searching for a compatible device connected to the network and capable of recording said received content information, by multicasting a search request over said network;
acquiring device information from at least one device having responded to said search request, said device information including compatible device information indicating that the responding device is a compatible device;
determining, based on said device information, whether said at least one device having sent said device information is a compatible device;
if said at least one device having sent said device information is found to be a compatible device, then acquiring from said compatible device a list of media and folders where said compatible device can store content information;
searching, responsive to the reception or update of the list of media and folders, among content information which was recorded, is being received, or is scheduled to be received, for content information having meta information matching to one of the media and folder names, acquired from said compatible device, where said compatible device can store content information; and
if content information having meta information related to one of the media and folder names, acquired from said compatible device, where said compatible device can store content information is detected, then offering the detected content information to said compatible device and transmitting, to said compatible device, information identifying said one of the media and folder names as the destination where said content information is to be stored.

## Patentansprüche

1. Empfangsvorrichtung zum Empfangen entweder in Art von Rundfunk oder über ein externes Netzwerk von Inhaltsinformation, welche aus Inhalten und Metainformation über die Inhalte besteht, wobei die Empfangsvorrichtung umfasst:
einen Gerätesuchabschnitt (126), der konfiguriert ist, nach einem kompatiblen Gerät, welches mit dem Netzwerk verbunden ist und welches in der Lage ist, die empfangene Inhaltsinformation aufzuzeichnen, durch Multicasting einer Suchanfrage über das Netzwerk zu suchen;
einen Geräteinformations-Erlangungsabsclmitt (128), der konfiguriert ist, Geräteinformation von zumindest einem Gerät zu erlangen, welches auf die Suchanfrage geantwortet hat, wobei die Geräteinformation eine kompatibles-Gerät-Information aufweist, die zeigt, dass das antwortende Gerät ein kompatibles Gerät ist;
einen Gerätekompatibilitäts-Bestimmungsabsclmitt (130), der konfiguriert ist, auf Basis der Geräteinformation zu bestimmen, ob das zumindest eine Gerät, welches die Geräteinformation gesendet hat, ein kompatibles Gerät ist;
einen Speicherziel-Informationserlangungsabschnitt (132), der konfiguriert ist, so dass, wenn herausgefunden wird, dass das zumindest eine Gerät, welches die Geräteinformation gesendet hat, ein kompatibles Gerät ist, der Speicherziel-Informationserlangungsabschnitt (132) dann von dem kompatiblen Gerät eine Liste von Media und Ordnern erlangt, wo das kompatible Gerät Inhaltsinformation speichern kann;
einen Inhaltssuchabschnitt (134), der konfiguriert ist, als Antwort auf den Empfang oder einen Update der Liste von Media und Ordnern unter Inhaltsinformation, welche durch die Empfangsvorrichtung aufgezeichnet wurde, gerade empfangen wird, oder für welche geplant wurde empfangen zu werden, nach Inhaltsinformation zu suchen, welche Metainformation hat die zu einer von den Media und Ordnernamen passt, welche von dem kompatiblen Gerät erlangt wurden, wo das kompatible Gerät Inhaltsinformation speichern kann; und
einen Inhaltsanbietungsabschnitt (136), der konfiguriert ist, so dass, wenn Inhaltsinformation, welche Metainformation bezogen auf eine von den Media und Ordnernamen hat, welche von dem kompatiblen Gerät erlangt wurden, wo das kompatible Gerät Inhaltsinformation speichern kann, erfasst wird, der Inhaltsanbietungsabschnitt (136) die erfasste Inhaltsinformation dann dem kompatiblen Gerät anbietet und zum kompatiblen Gerät Information überträgt, welche einen von den Media und Ordnern als den Zielort, wo die Inhaltsinformation aufzuzeichnen ist, identifiziert.

2. Empfangsvorrichtung nach Anspruch 1, welche außerdem einen Listenbildungsabschnitt umfasst, der konfiguriert ist, eine Liste kompatibler Geräte zu bilden, welche Information über die kompatiblen Geräte aufzeichnet, auf Basis der Geräteinformation und der Media- und Ordnerliste, welche von den kompatiblen Einrichtungen erlangt wird; wobei
der Listenbildungsabschnitt konfiguriert ist, wenn der Gerätekompatibilitäts-Bestimmungsabschnitt (130) bestimmt, dass das zumindest eine Gerät, welches die Geräteinformation gesendet hat, das kompatible Gerät ist, das zumindest eine Gerät auf der Liste kompatibler Geräte aufzuzeichnen; und
der Listenbildungsabschnitt konfiguriert ist, wenn der Speicherziel-Informationserlangungsabschnitt (132) die Media- und Ordnerliste erlangt, welche durch das Gerät eingerichtet ist, welche in der Liste kompatibler Geräte aufgezeichnet ist, die erlangte Media- und Ordnerliste in der Liste kompatibler Geräte in Bezug auf das kompatible Gerät aufzuzeichnen, welche in Besitz der erlangten Media- und Ordnerliste ist.

3. Empfangsvorrichtung nach Anspruch 1, wobei der Speicherziel-Informationserlangungsabschnitt konfiguriert ist, wenn Änderungen in den Medianamen und Ordnernamen bezogen auf das kompatible Gerät aufgetreten sind und der Speicherziel-Informationserlangungsabschnitt (132) Statusänderungsinformation erlangt, welche die Änderungen in den Medianamen und Ordnernamen zeigt und welche durch das kompatible Gerätg über das Netzwerk durch Multicasting gesendet wird, seine Aufzeichnung der Medialiste und Ordnerliste bezogen auf die kompatible Einrichtung auf Basis der Statusänderungsinformation aktualisiert.

4. Empfangsvorrichtung nach Anspruch 1, wobei der Inhaltssuchabschnitt (134) konfiguriert ist, wenn der Speicherziel-Informationserlangungsabschnitt (132) Metainformation erlangt, welche zeigt, dass Inhalte, welche zur kompatiblen Einrichtung gehören, wiedergegeben wurden, auf Basis der Speicherziel-Information, welche durch das kompatible Gerät über das Netzwerk durch Multicasting übermittelt wird, nach Inhaltsinformation bezogen auf die wiedergegebenen Inhalte zu suchen; und
der Inhaltsanbietungsabschnitt konfiguriert ist, wenn Inhaltsinformation bezogen auf die wiedergegebenen Inhalte erfasst wird, die erfasste Inhaltsinformation bevorzugt gegenüber anderer Inhaltsinformation an das kompatible Gerät zu senden, welches die Metainformation gesendet hat, welche den Abschluss der Inhaltswiedergabe zeigt.

5. Empfangsvorrichtung nach Anspruch 1, wobei der Inhaltssuchabschnitt (134) konfiguriert ist, wenn das kompatible Gerät mit einem Ordner bereitgestellt wird, um empfohlene Inhaltsinformation aufzuzeichnen, und die Media- und Ordnernamen zumindest einen Namen aufweisen, der für den Ordner repräsentativ ist, nach empfohlener Inhaltsinformation zu suchen; und
der Inhaltsanbietungsabschnitt (136) konfiguriert ist, Dateien vom Ordner zu löschen und empfohlene Inhaltsinformation zum in den Ordner Schreiben, anzubieten.

6. Empfangsvorrichtung nach Anspruch 5, wobei die empfohlene Inhaltsinformation Kurzfassungsinformation ist, welche Teile von mehreren Einheiten, welche jeden Inhalt bilden, kombiniert;
und wobei der Inhaltsanbietungsabschnitt (136) konfiguriert ist, wenn die Kurzfassungsinformation durch das kompatible Gerät wiedergegeben wird, entweder empfohlenen Inhalt entsprechend der Kurzfassungsinformation automatisch anzubieten oder eine Prozedur durchzuführen, um zuzulassen, dass der empfohlene Inhalt, wenn der empfohlene Inhalt verfügbar ist, auf Basis einer Berechnung erworben wird.

7. Inhaltsempfangsverfahren zum Empfangen entweder in Art von Rundfunk oder über ein externes Netzwerk von Inhaltsinformation, welche aus Inhalten gebildet wird, und von Metainformation über die Inhalte und zum Übertragen empfangener Inhaltsinformation zu einem externen Gerät, wobei das Inhaltsempfangsverfahren folgende Schritte umfasst:
Suchen nach einem kompatiblen Gerät, welches mit dem Netzwerk verbunden ist, und in der Lage ist, die empfangene Inhaltsinformation aufzuzeichnen, durch Multicasting einer Suchanfrage über das Netzwerk;
Erlangen von Geräteinformation von zumindest einem Gerät, welches auf die Suchanfrage geantwortet hat, wobei die Geräteinformation eine kompatibles-Gerät-Information aufweist, die zeigt, dass das antwortende Gerät ein kompatibles Gerät ist;
Bestimmen - auf Basis der Geräteinformation - ob das zumindest eine Gerät, welches die Geräteinformation gesendet hat, ein kompatibles Gerät ist;
wenn gefunden wird, dass das zumindest eine Gerät, welches die Inhaltsinformation gesendet hat, ein kompatibles Gerät ist, Erlangen von dem kompatiblen Gerät einer Liste von Media und Ordnern, wenn das kompatible Gerät Inhaltsinformation speichern kann;
Suchen als Antwort auf den Empfang oder Aktualisierung der Liste von Media und Ordnern unter Inhaltsinformation, welche aufgezeichnet wurde, welche gerade empfangen wird oder für welche geplant ist, empfangen zu werden, nach Inhaltsinformation, welche Metainformation hat, welche mit einem der Medianamen und Ordnernamen übereinstimmt, welche von der kompatiblen Einrichtung erlangt wurden, wo das kompatible Gerät Inhaltsinformation speichern kann; und
wenn die Inhaltsinformation, welche Metainformation bezogen auf einen von den Medianamen und Ordnernamen hat, welche von der kompatiblen Einrichtung erlangt wurde, wo das kompatible Gerät Inhaltsinformation speichern kann, erfasst wird, Anbieten der erfassten Inhaltsinformation dem kompatiblen Gerät und Übertragen an das kompatible Gerät von Information, welche einen von den Medianamen und Ordnernamen als den Bestimmungsort identifiziert, wo die Inhaltsinformation zu speichern ist.

## Revendications

1. Appareil de réception apte à recevoir, soit de manière radiodiffusée soit via un réseau externe, de l'information de contenu constituée de contenus et de méta-information au sujet desdits contenus, ledit appareil de réception comprenant :
une section de recherche de dispositif (126) constituée pour rechercher un dispositif compatible connecté au réseau et capable d'enregistrer l'information de contenu reçue, par multidiffusion d'une demande de recherche sur ledit réseau ;
une section d'acquisition d'information de dispositif (128) constituée pour acquérir de l'information de dispositif en provenance d'au moins un dispositif ayant répondu à ladite demande de recherche, ladite information de dispositif incluant de l'information de dispositif compatible indiquant que le dispositif répondant est un dispositif compatible ;
une section de détermination de compatibilité de dispositif (130) constituée pour déterminer, en se basant sur ladite information de dispositif, si ledit au moins un dispositif ayant envoyé ladite information de dispositif est un dispositif compatible ;
une section d'acquisition d'information de destination de mémorisation (132) constituée de façon que, si l'on trouve que ledit au moins un dispositif ayant envoyé ladite information de dispositif est un dispositif compatible, alors ladite section d'acquisition d'information de destination de mémorisation (132) acquiert dudit dispositif compatible une liste de supports et de dossiers où ledit dispositif compatible peut mémoriser de l'information de contenu ;
une section de recherche de contenu (134) constituée pour, en réponse à la réception ou à la mise à jour de ladite liste de supports et de dossiers, rechercher, dans l'information de contenu qui a été enregistrée, qui est en train d'être reçue ou qui est prévue pour être reçue, par l'appareil de réception, d'une information de contenu ayant une méta-information correspondant à l'un des noms de support ou de dossier, acquis à partir dudit dispositif compatible, où ledit dispositif compatible peut mémoriser de l'information de contenu ; et
une section d'offre de contenu (136) constituée de façon que, si l'on détecte de l'information de contenu ayant une méta-information se rapportant à l'un des noms de support et de dossier, acquis à partir dudit dispositif compatible, où ledit dispositif compatible peut mémoriser de l'information de contenu, alors ladite section d'offre de contenu (136) propose, audit dispositif compatible, l'information de contenu détectée et transmet, au dispositif compatible, de l'information identifiant ledit un des supports et dossiers comme destination où doit être enregistrée ladite information de contenu.

2. Appareil de réception selon la revendication 1, comprenant en outre une section de création de liste constituée pour créer, à partir de ladite information de dispositif et de la liste de supports et de dossiers acquise desdits dispositifs compatibles, une liste de dispositifs compatibles qui enregistre de l'information au sujet des dispositifs compatibles,
dans lequel ladite section de création de liste est constituée pour, lorsque ladite section de détermination de compatibilité de dispositif (130) détermine que ledit au moins un dispositif ayant envoyé ladite information de dispositif est ledit dispositif compatible, enregistrer ledit au moins un dispositif dans ladite liste de dispositifs compatibles, et
dans lequel ladite section de création de liste est constituée pour, lorsque ladite section d'acquisition d'information de destination de mémorisation (132) acquiert ladite liste de supports et de dossiers établie par le dispositif enregistré dans ladite liste de dispositifs compatibles, enregistrer la liste acquise de supports et de dossiers dans ladite liste de dispositifs compatibles en relation avec ledit dispositif compatible en possession de ladite liste acquise de supports et de dossiers.

3. Appareil de réception selon la revendication 1, dans lequel ladite section d'acquisition d'information de destination de mémorisation est constituée pour, lorsque des changements se produisent dans les noms de support et de dossier correspondant audit dispositif compatible et que ladite section d'acquisition d'information de destination de mémorisation (132) acquiert de l'information de changement d'état qui indique lesdits changements dans lesdits noms de support et de dossier et qui est multidiffusée par ledit dispositif compatible sur ledit réseau, mettre à jour, à partir de ladite information de changement d'état, son enregistrement de la liste de supports et de dossiers correspondant audit dispositif compatible.

4. Appareil de réception selon la revendication 1, dans lequel ladite section de recherche de contenu (134) est constituée pour, lorsque ladite section d'acquisition d'information de destination de mémorisation (132) acquiert une méta-information indiquant, à partir de l'information de destination de mémorisation multidiffusée par ledit dispositif compatible sur ledit réseau, que des contenus possédés par ledit dispositif compatible ont été reproduits, rechercher l'information de contenu correspondant aux contenus reproduits, et
dans lequel ladite section d'offre de contenu est constituée pour, si l'information de contenu correspondant aux contenus reproduits est détectée, envoyer l'information de contenu détectée, de préférence à une autre information de contenu, audit dispositif compatible ayant envoyé la méta-information indiquant l'achèvement de la reproduction de contenu.

5. Appareil de réception selon la revendication 1, dans lequel ladite section de recherche de contenu (134) est constituée pour, si ledit dispositif compatible est pourvu d'un dossier pour enregistrer de l'information de contenu recommandée et si lesdits noms de support et de dossier incluent au moins un nom représentatif dudit dossier, rechercher l'information de contenu recommandée, et
dans lequel ladite section d'offre de contenu (136) est constituée pour supprimer des fichiers dudit dossier et pour proposer de l'information de contenu recommandée pour écriture dans ledit dossier.

6. Appareil de réception selon la revendication 5, dans lequel ladite information de contenu recommandée est de l'information de sommaire qui combine des parties d'une pluralité d'éléments constituant chaque contenu, et
dans lequel ladite section d'offre de contenu (136) est constituée pour, lorsque ladite information de sommaire est reproduite par ledit dispositif compatible, soit proposer automatiquement le contenu recommandé correspondant à ladite information de sommaire, soit mettre en oeuvre une procédure pour permettre d'acheter ledit contenu recommandé si ledit contenu recommandé est disponible à titre payant.

7. Procédé de réception de contenu pour recevoir, soit de manière radiodiffusée soit via un réseau externe, de l'information de contenu constituée de contenus et de méta-information au sujet desdits contenus et pour transférer à un dispositif externe l'information de contenu reçue, ledit procédé de réception de contenu comprenant les étapes :
de recherche d'un dispositif compatible connecté au réseau et capable d'enregistrer ladite information de contenu reçue, par multidiffusion d'une demande de recherche sur ledit réseau ;
d'acquisition d'information de dispositif en provenance d'au moins un dispositif ayant répondu à ladite demande de recherche, ladite information de dispositif incluant de l'information de dispositif compatible indiquant que le dispositif répondant est un dispositif compatible ;
de détermination, en se basant sur ladite information de dispositif, de ce que ledit au moins un dispositif ayant envoyé ladite information de dispositif est ou non un dispositif compatible ;
si l'on trouve que ledit au moins un dispositif ayant envoyé ladite information de dispositif est un dispositif compatible, alors l'acquisition dudit dispositif compatible d'une liste de supports et de dossiers où ledit dispositif compatible peut mémoriser de l'information de contenu ;
de recherche, en réponse à la réception ou à la mise à jour de la liste de supports et de dossiers, dans l'information de contenu qui a été enregistrée, qui est en train d'être reçue ou qui est prévue pour être reçue, d'une information de contenu ayant une méta-information correspondant à l'un des noms de support ou de dossier, acquis à partir dudit dispositif compatible, où ledit dispositif compatible peut mémoriser de l'information de contenu ; et
si l'on détecte de l'information de contenu ayant une méta-information se rapportant à l'un des noms de support et de dossier, acquis à partir dudit dispositif compatible, où ledit dispositif compatible peut mémoriser de l'information de contenu, alors de proposition, audit dispositif compatible, de l'information de contenu détectée et de transmission, audit dispositif compatible, de l'information identifiant ledit un des noms de support et de dossier comme destination où doit être mémorisée ladite information de contenu.
